# EUROPEAN PATENT APPLICATION

(11) **EP 3 367 115 A1**
(43) Date of publication of application: **29.08.2018**
(21) Application number: 18153227.6
(22) Date of filing: 24.01.2018
(51) Int. Cl.: G01R 31/36

(54) **BATTERY CHECK DEVICE AND METHOD FOR CHECKING BATTERY**

(30) Priority: 31.01.2017 US 201715420149
(71) Applicant: Toshiba TEC Kabushiki Kaisha, Tokyo 141-8562 (JP)
(72) Inventor: KUNIYA, Yoshitaka, Shinagawa-ku, Tokyo 141-8562 (JP)
(74) Representative: Takeuchi, Maya

(57) **Abstract**

In accordance with an embodiment, a battery check device comprises a memory, an interface and a processor. The memory stores deterioration diagnosis information for determining a deterioration amount corresponding to a usage state of a battery. The interface is connected with a battery to which the deterioration diagnosis information is applicable. The processor reads history information indicating the usage state from the battery connected with the interface, and determines the deterioration amount of the battery connected with the interface on the basis of the history information read from the battery and the deterioration diagnosis information stored in the memory.

## Description

### FIELD

The present invention relates to the field of battery checking technologies in general, and embodiments described herein relate in particular to a battery check device and a battery check system.

### BACKGROUND

In recent years, the use of batteries has a tendency to increase in frequency due to popularization of mobile devices and electric automobiles. Further, uses of the batteries are also diversified. Consequently, batteries need to be exchanged due to charging and deterioration. As the charging or the exchange is carried out more efficiently, various systems for providing a battery to a user are proposed. However, not only the number of times of charging and discharging but also consumption and lifetime of the battery vary according to an actual usage environment. In the conventional system, it is difficult to properly provide a battery according to the actual usage environment.

To solve such problem, there is provided a battery check device, comprising: a memory configured to store deterioration diagnosis information for determining a deterioration amount corresponding to a usage state of a battery; an interface configured to connect with the battery to which deterioration diagnosis based on the deterioration diagnosis information is applicable; and a processor configured to read history information indicating the usage state from the battery connected with the interface, and determine the deterioration amount of the battery connected with the interface on the basis of the history information read from the battery and the deterioration diagnosis information stored in the memory.

Preferably, the deterioration diagnosis information comprises information indicating a deterioration amount corresponding to a temperature of a usage environment of the battery; and the processor is configured to determine the deterioration amount of the battery comprising deterioration corresponding to the temperature of the environment where the battery is used which is specified from the history information with reference to the deterioration diagnosis information.

Preferably still, the deterioration diagnosis information comprises information indicating a deterioration amount corresponding to a usage period of the battery; and the processor is configured to determine the deterioration amount of the battery comprising deterioration corresponding to the usage period of the battery which is specified from the history information with reference to the deterioration diagnosis information.

Preferably yet, the battery check device further comprises:
a display section and the processor is configured to convert the deterioration amount of the battery to an index in a case in which an electric motor operates using the battery in a standard environment and displays the converted index as a value indicating the deterioration amount of the battery on the display section.

Suitably, the battery check device further comprises: a display section and the processor is configured to display information indicating a primary factor of increase of the deterioration amount of the battery in a case in which the deterioration amount of the battery is larger than the deterioration amount in a case in which an electric motor operates using the battery in the standard environment on the display section.

Suitably still, the battery check device further comprises:
a settlement section configured to settle a fee, the processor is configured to calculate a usage fee comprising a use fee corresponding to the determined deterioration amount and carries out a settlement processing of the calculated usage fee with the settlement section.

The invention also relates to a battery check system, comprising: a mobile device configured to be charged by the battery; and the battery check device as a host terminal configured to communicate with the mobile device.

Additionally, the invention relates to a method for checking deterioration amount of a partially or fully discharged battery, comprising steps of: reading history information indicating the usage state from the battery; reading deterioration diagnosis information stored in a memory or obtainable from a network; and determining the deterioration amount of the battery on the basis of the history information read from the battery and the deterioration diagnosis information stored in the memory.

Preferably, the history information comprises temperature of an environment where the battery is used.

Preferably still, the history information comprises usage of period of the battery.

Preferably yet, the method further comprises steps of: converting the deterioration amount of the battery to an index in a case in which an electric motor operates using the battery in a standard environment; and displaying the converted index as a value indicating the deterioration amount of the battery.

Suitably, the method further comprises step of: displaying information indicating a primary factor of increase of the deterioration amount of the battery in a case in which the deterioration amount of the battery is larger than the deterioration amount in a case in which an electric motor operates using the battery in the standard environment.

Suitably still, the method further comprises step of: calculating a usage fee comprising a use fee corresponding to the determined deterioration amount.

Suitably yet, the battery is used for a mobile printer.

Typically still, the battery is used for an electric vehicle.

The present invention further relates a battery check system, comprising: a host terminal configured to communicate with a mobile device loaded with a battery, the host terminal, comprising: an interface configured to communicate with the mobile device; a second memory configured to store deterioration diagnosis information for determining a deterioration amount corresponding to a usage state of the battery; and a processor configured to read history information from the mobile device, and determine the deterioration amount of the battery on the basis of the history information read from the mobile device and the deterioration diagnosis information.

Preferably, the deterioration diagnosis information comprises information indicating a deterioration amount corresponding to a temperature of a usage environment of the battery; and the processor determines the deterioration amount of the battery comprising deterioration corresponding to the temperature of the environment where the battery is used which is specified from the history information with reference to the deterioration diagnosis information.

Preferably still, the deterioration diagnosis information comprises information indicating a deterioration amount corresponding to a usage period of the battery; and the processor determines the deterioration amount of the battery comprising deterioration corresponding to the usage period of the battery which is specified from the history information with reference to the deterioration diagnosis information.

Preferably yet, the battery check system further comprises:
a display section, the processor converts the deterioration amount of the battery to an index in a case in which an electric motor operates using the battery in a standard environment and displays the converted index as a value indicating the deterioration amount of the battery on the display section.

Suitably, the battery check system further comprises: a display section, the processor displays information indicating a primary factor of increase of the deterioration amount of the battery in a case in which the deterioration amount of the battery is larger than the deterioration amount in a case in which an electric motor operates using the battery in the standard environment on the display section.

Suitably still, the battery check system further comprises: a settlement section configured to settle a fee, the processor calculates a usage fee comprising a use fee corresponding to the determined deterioration amount and carries out a settlement processing of the calculated usage fee with the settlement section.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram illustrating an example of the configuration of a battery supplied by a battery providing system according to a first embodiment;
Fig. 2 is a block diagram illustrating an example of the configuration of a check device in the battery providing system according to the first embodiment;
Fig. 3 is a flowchart schematically illustrating the flow of an exchange service of the battery by the battery providing system according to the first embodiment;
Fig. 4 is a diagram illustrating deterioration of the battery supplied by the battery providing system according to the first embodiment;
Fig. 5 is a flowchart illustrating the flow of a processing by the check device in the battery providing system according to the first embodiment;
Fig. 6 is a block diagram illustrating an example of the configuration of a mobile device including a battery supplied by a battery providing system according to a second embodiment;
Fig. 7 is a block diagram illustrating an example of the configuration of a charging device in the battery providing system according to the second embodiment;
Fig. 8 is a block diagram illustrating an example of the configuration of a host terminal in the battery providing system according to the second embodiment; and
Fig. 9 is a flowchart illustrating the flow of a processing by the host terminal according to the second embodiment.

### DETAILED DESCRIPTION

In accordance with an embodiment, a battery check device comprises a memory, an interface and a processor. The memory stores deterioration diagnosis information for determining a deterioration amount corresponding to a usage state of a battery. The interface is connected with a battery to which the deterioration diagnosis information is applicable. The processor reads history information indicating the usage state from the battery connected with the interface, and determines the deterioration amount of the battery connected with the interface on the basis of the history information read from the battery and the deterioration diagnosis information stored in the memory.

Hereinafter, embodiments of the invention are described with reference to the accompanying drawings.

A battery providing system according to the embodiment is a system for providing a battery for a user. Various uses or application forms of the battery which is provided for the user by the battery providing system are assumed. In the following description, as examples of the battery providing system, a first embodiment and a second embodiment are described. In the first embodiment, a battery providing system is described which exchanges a used battery with another charged battery to provide the charged battery to the user. For example, the first embodiment assumes a system which provides a battery used in an electric automobile (electric motor) . In the second embodiment, a battery providing system is described in which a user carries out daily charging of a battery and exchanges the battery depending on deterioration of the battery at a regular or any timing. For example, the second embodiment assumes a system which provides a battery used in a mobile device.

### (First Embodiment)

A battery providing system according to the first embodiment provides a user with a battery loaded on an electric automobile as an electric motor. The battery providing system according to the first embodiment, for example, provides a service for changing the battery of the electric automobile at a predetermined place (hereinafter, referred to as a charging stand) . The charging stand collects the battery loaded on the automobile and provides a service for exchanging the collected battery with a full charge battery. The battery providing system collects from the user a usage fee including a use fee based on amount of electric (discharge amount) used in the collected battery and a deterioration amount accompanying the use.

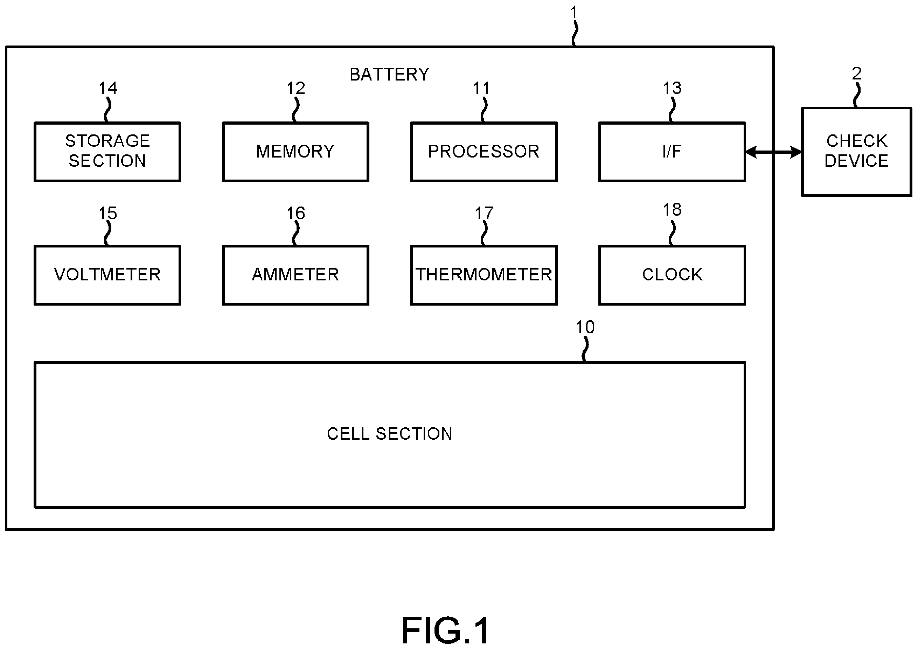

Fig. 1 is a block diagram schematically illustrating an example of the configuration of a battery 1 provided for the user in the battery providing system according to the first embodiment.

The battery 1 is assumed to be, for example, a battery loaded on the electric automobile (electric motor) . The battery 1 loaded on the electric automobile can be exchanged at the charging stand in a short time. The battery 1 has functions for not only simply changing and discharging electric power but also storing information indicating various situations at the time of the use as history information.

In the example of the configuration shown in Fig. 1, the battery 1 is provided with a cell section 10 for charging and discharging electricity. The battery 1 is further provided with a processor 11, a memory 12, an I/F 13, a storage section 14, a voltmeter 15, an ammeter 16, a thermometer 17 and a clock 18 in addition to the cell section 10.

The cell section 10 is provided with one or a plurality of cells functioning as a secondary battery. All the cells of the cell section 10 are connected in series or in parallel to constitute an assembled battery. The cell section 10 is provided with a connection terminal for connecting with a load (main body of the automobile) or a charging system. Each cell of the cell section 10 is charged by electric power supplied to the connection terminal. Further, each cell of the cell section 10 discharges the electric power by supplying the electric power to the load connected with the connection terminal.

The processor 11 carries out control of each section and an arithmetic processing. The processor 11 includes an arithmetic circuit. The processor 11 is, for example, a CPU. The memory 12 includes storage devices such as a RAM functioning as a working memory and a ROM functioning as a program memory. The processor 11 realizes various processing functions by executing programs stored in the memory 12 or the storage section 14.

The I/F 13 is an interface for carrying out data communication with an external device. In the first embodiment, the I/F 13 is constituted as an interface for communicating with a check device 2. For example, the processor 11 outputs data accumulated (stored) in the storage section 14 via the I/F 13.

The storage section 14 is a data memory. The storage section 14 stores history information indicating usage states of the battery 1. For example, the storage section 14 stores values measured by the voltmeter 15, the ammeter 16 and the thermometer 17 as the history information associated with date and time.

The voltmeter 15, the ammeter 16 and the thermometer 17 are measuring instruments which measure information indicating states of the battery 1. The voltmeter 15 measures a voltage value of the cell section 10 (assembled battery constituted by all the cells of the cell section 10). The ammeter 16 measures a value of a current flowing through the connection terminal of the cell section 10. For example, at the time of charging and discharging, the ammeter 16 measures the current value indicating electric energy charged to or discharged from the cell section 10. Further, at the time of non-charging and discharging (at the time of stillness), the voltmeter 15 measures a voltage value indicating electric energy (remaining charged amount) accumulated in the cell section 10. Further, the thermometer 17 measures a temperature of the cell section 10 or that of the vicinity of the cell section 10. Each of the measuring instruments (the voltmeter 15, the ammeter 16 and the thermometer 17) is connected with the processor 11. The processor 11 can acquire the value measured by each of the measuring instruments 15 to 17 at any time. Furthermore, the battery 1 may be provided with a measuring instrument that measures information other than the voltage, the current and the temperature as information for calculating the deterioration amount of the battery described later.

The clock 18 counts date and time. Further, the clock 18 may be a timer which counts a charging interval and usage time. The storage section 14 stores the information such as the number of times of charging, the number of times of discharging, the current value, the voltage value and the temperature as the history information associated with the date and time counted by the clock 18. For example, the processor 11 stores charging history information including the date and time of charging and the number of times of charging in the storage section 14 as the history information. Further, the processor 11 stores discharging history information such as the date and time of discharging and the number of times of discharging in the storage section 14 as the history information. Further, the processor 11 stores the information measured by the voltmeter 15, the ammeter 16 and the thermometer 17 in the storage section 14 as the history information indicating the usage states associated with the date and time.

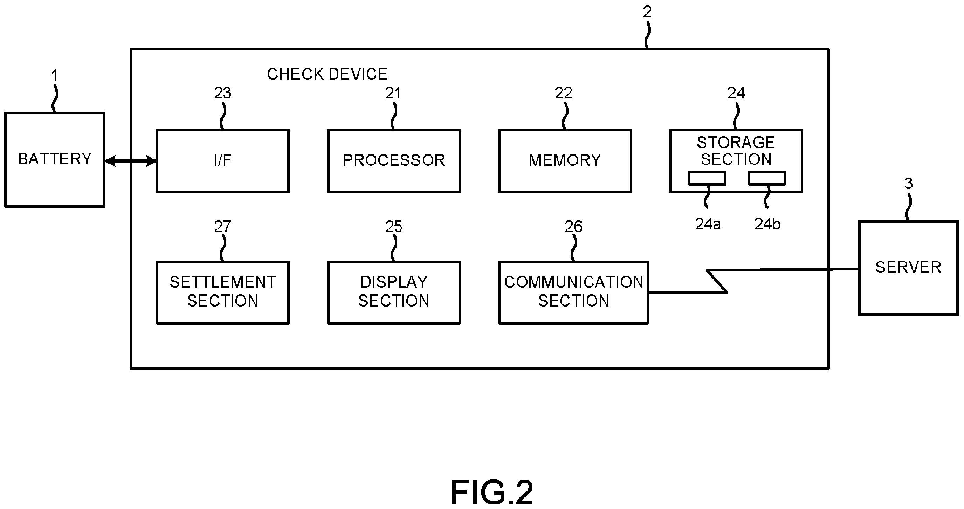

Fig. 2 is a block diagram schematically illustrating an example of the configuration of the check device (battery check device) 2 for checking the battery 1 in the battery providing system according to the first embodiment.

It is assumed that the check device 2 is connected with the battery 1 loaded on the electric automobile. The check device 2, for example, is arranged on the charging stand which carried out an exchange service of the battery 1 loaded on the electric automobile. The check device 2 is connected with the used battery (battery to be collected) 1 removed from the electric automobile. The check device 2 can serve as a charging device that charges the battery 1.

In the example of the configuration shown in Fig. 2, the check device 2 is provided with a processor 21, a memory 22, an I/F 23, a storage section 24, a display section 25, a communication section 26 and a settlement section 27.

The processor 21 carries out control of each section and an arithmetic processing. The processor 21 includes an arithmetic circuit. The processor 21 is, for example, a CPU. The memory 22 includes storage devices such as a RAM functioning as a working memory and a ROM functioning as a program memory. The processor 21 realizes various processing functions by executing programs stored in the memory 22 or the storage section 24.

The I/F 23 is an interface for carrying out data communication with an external device. In the first embodiment, the I/F 23 is constituted as an interface for communicating with the battery 1. For example, the processor 21 acquires the history information from the battery 1 via the I/F 23.

The storage section 24 is a data memory. The storage section 24 stores various kinds of information for realizing a variety of processing executed by the processor 21. For example, the storage section 24 may store information indicating a check result of the battery or may store data for display. Further, the storage section 24 is provided with a storage area 24a that stores a program for carrying out a check processing of the battery and a storage area 24b that stores deterioration diagnosis information of the battery. The deterioration diagnosis information of the battery is used to determine the deterioration amount of the battery 1 from the information acquired from the battery 1. For example, the deterioration diagnosis information of the battery includes information for calculating the deterioration amount corresponding to the temperature at the time of the use. Further, the deterioration diagnosis information of the battery includes information for calculating the deterioration amount corresponding to a usage period (time).

The display section 25 displays the information. The display section 25 displays the information such as the check result of the battery. The communication section 26 is an interface for communicating with an external device. For example, the communication section 26 is a network interface for communicating with a server 3 via a network. The server 3 may provide the check device 2 with the information for checking the battery, or collect the information from a plurality of the check devices 2. The settlement section 27 carries out a settlement processing. The settlement section 27 may carry out settlement with cash or settlement with a credit card or electronic money.

Next, the flow of a processing for providing a battery for the user in the battery providing system according to the first embodiment is described.

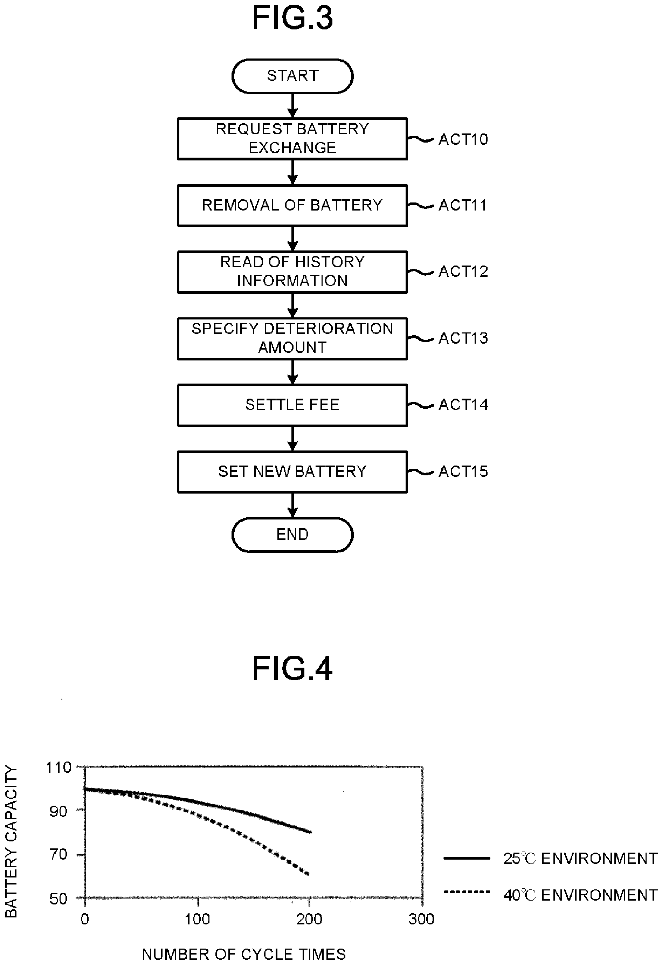

Fig. 3 is a flowchart schematically illustrating the flow of the entire processing in the battery providing system according to the first embodiment.

The user visits the charging stand by the electric automobile and requests the exchange of the battery if wanting to exchange the battery 1 loaded on the electric automobile (ACT 10). In the charging stand, a worker receives the request of the battery exchange from the user to remove the battery loaded on the electric automobile (ACT 11). The worker connects the removed battery 1 with the check device 2, and instructs the check device 2 to start the check processing of the battery. Furthermore, the check device 2 may detect that the battery 1 is connected therewith to start the check processing of the battery. The check device 2 with which the battery 1 is connected carries out the check processing of the battery according to the start instruction.

In the check processing of the battery, the check device 2 reads out the history information from the connected battery 1 (ACT 12), and specifies the deterioration amount according to the read history information (ACT 13). Not only the number of times of charging and discharging but also the deterioration amount of the battery 1 is changed even according to the usage environment. For example, the battery used in a high temperature is deteriorated more easily than the battery used in a normal temperature (deterioration amount thereof becomes large). Further, the battery used in a low temperature is deteriorated more easily than the battery used in the normal temperature (deterioration amount thereof becomes large) . Further, even if the discharge amount is the same, the battery of which the usage time is relatively long is deteriorated more easily (deterioration amount thereof becomes large).

The history information read from the check device 2 by the battery 1 refers to information for specifying the deterioration amount corresponding to the usage states. For example, the information for specifying the deterioration amount includes the information indicating the temperature at the time of the use and the information indicating the time used (usage period) . Further, the information for specifying the deterioration amount may be the information contained in the history information or use information other than the temperature and the time.

If determining the deterioration amount, the check device 2 calculates the usage fee (exchange fee) of the battery on the basis of the deterioration amount, the discharge amount and an exchange wage to carry out settlement of the usage fee (ACT 14) . The check device 2 may inform the user which information contained in the history information is a base on which the deterioration amount is calculated, in addition to the calculated usage fee.

If the settlement of the usage fee is completed, the worker mounts a new battery which is in a full charge state on the electric automobile of the user (ACT 15), and ends the battery exchange.

According to the foregoing flow, as the service for exchanging the battery, a system for carrying out the collection of the usage fee corresponding to the deterioration amount based on usage history of the used battery can be provided.

Next, the deterioration of the battery 1 is described.

Not only the number of times of charging and discharging (number of cycle times) but also deterioration progress degrees (deterioration amount) of the battery 1 are different even according to usage environments. For example, the deterioration amount of the battery is different according to temperature environments at the time of the use. Further, the deterioration amount of the battery is different according to the usage time. In general, the battery is designed in such a manner that regulated performance thereof can be exhibited in an environment of a reference temperature (for example, 25 degrees centigrade). Normally, if the battery is used in a higher or lower temperature environment than the reference temperature, the deterioration amount thereof becomes large. Further, the deterioration of the battery occurs even with passage of time. Thus, the longer the usage time of the battery is, the larger the deterioration becomes .

Herein, a relationship between the temperature of the usage environment and the deterioration is described.

Fig. 4 is a diagram illustrating an example of a relationship between the number of cycle times and a battery capacity in different temperatures.

The example shown in Fig. 4 illustrates a state in which the capacity of the battery of which the capacity is reduced to 80% in the environment of 25 degrees centigrade is reduced to 60% in the environment of 40 degrees centigrade in a case in which the number of cycle times is 200 times. Furthermore, the graph shown in Fig. 4 also illustrates that the larger the number of cycle times is, the more the capacity is reduced, and a radio of the reduction (deterioration) of the capacity in the high temperature environment becomes large. Further, it is also known that the higher (or lower) the temperature becomes than the reference temperature, the larger the deterioration amount of the battery becomes. Thus, if information (deterioration diagnosis information) indicating the relationship between the temperature of the usage environment and the deterioration amount is referred, the deterioration amount of the battery can be determined (assumed) from the temperature environment at the time of the use.

The battery loaded on the electric automobile is designed by taking a standard temperature environment at which the automobile travels as the reference temperature (for example, 25 degrees centigrade). Thus, the deterioration amount of the battery of the electric automobile travelling in the higher temperature environment than the reference temperature becomes large compared with a case in which the electric automobile travels in the environment of the reference temperature. Further, the deterioration amount of the battery of the electric automobile travelling in the lower temperature environment than the reference temperature also becomes large compared with a case in which the electric automobile travels in the environment of the reference temperature.

Next, a technique for converting the deterioration amount of the battery to an index (for example, a distance) which is easily understood by the user is described.

In general, currents of the battery such as a standard charge current and a standard discharge current are respectively defined. The number of cycle times of the battery can repeat the charging until the full charge at the standard charge current and the discharging until a low battery at the standard discharge current in the normal temperature (for example, 25 degrees centigrade). For example, it can be said that the battery of which the number of cycle times is 500 times can carry out the charging and discharging for 500 times.

Herein, the electric automobile loaded with the battery can averagely run for 100 km by being charged once. If the battery can be repeated for 1000 times, the lifetime by definition of the battery is 100 km * 1000, that is, 100000 km by being converted to a travelling distance of the electric automobile. However, the predefined lifetime is lifetime in a predefined standard environment. In a case in which the battery is used in an environment where the deterioration of the battery is worse than that in the predefined standard environment, the lifetime converted to the distance becomes short (deterioration amount becomes large).

The battery defined to be repeatable for 1000 times can be used for 1000 cycles in the standard environment. However, as stated above, the battery is deteriorated if used in the high temperature environment. For example, if the electric automobile travels for 100 km at the high temperature, it is also possible that the deterioration is such that the lifetime converted to the distance may be equivalent to 200 km (equivalent to 2 cycles). In the battery providing system according to the first embodiment, the temperature in the environment where the battery is used is stored as the history information. In this way, the deterioration of the battery can be determined on the basis of the history information of the battery.

For example, in a case in which the battery is loaded on the electric automobile which travels for 100 km in the open-air environment of the standard temperature (25 degrees centigrade), the amount of consumption as the deterioration amount converted to the distance thereof maybe equivalent to 100 km. If this battery loaded on the electric automobile which travels for 100 km at the open-air environment of the higher temperature than the standard temperature, the amount of consumption thereof is longer than 100 km. For example, if the battery is loaded on the electric automobile which travels for 100 km at the open-air environment of 40 degrees centigrade, the amount of consumption thereof may be equivalent to 200 km.

Further, the deterioration of the battery progresses even in a case in which the usage time including standing time is long. For example, if the battery is loaded on the electric automobile which travels for 100 km one day, the amount of consumption thereof may be equivalent to 100 km. If the battery is loaded on the electric automobile which travels for 100 km during a period longer than one day under the same condition, the amount of consumption thereof is longer than 100 km. For example, if the battery is loaded on the electric automobile which travels for 100 km in one month, the amount of consumption thereof may be equivalent to 200 km.

Furthermore, if both the temperature and the usage time are considered, the amount of consumption as the deterioration amount converted to the distance of the battery is further longer if the battery is used at the high temperature for a long time. For example, if the battery is loaded on the electric automobile which travels for 100 km one day in the environment of 25 degrees centigrade, the amount of consumption thereof may be equivalent to 100 km. If the battery is loaded on the electric automobile which travels for 100 km in one month in the environment of 40 degrees centigrade, the amount of consumption thereof is further longer than 200 km (for example, equivalent to 300 km).

As stated above, as to the battery which stores the history information indicating the usage state, it is possible to convert the deterioration amount determined from the history information to another index such as a distance. For example, it is possible to convert the deterioration amount of the battery loaded on the electric automobile to the distance on the basis of the information such as the temperature or the time at the time of the use which is obtained from the history information.

Further, in a case in which the battery is not used in the standard environment, it is also possible to determine which kind of environment causes that the deterioration amount of the battery becomes large if the battery is used in such the environment. For example, the check device 2 may inform that the deterioration (an index such as converted distance) becomes large due to the use at the high temperature in a case in which the battery is used at the high temperature. Further, the check device 2 may inform that the deterioration (an index such as converted distance) becomes large due to the long- period use in a case in which the battery is used for a long period.

In the first embodiment, a processing for converting the deterioration amount of the battery to the distance as stated above is carried out by the check device . By converting the deterioration amount of the battery to an index such as the distance, the check device can convert the deterioration amount of the battery to the distance to present the converted distance to the user. Further, the check device can also present the reason to the user in a case in which the deterioration amount becomes large (for example, the converted distance becomes long) . As a result, even if the usage fee corresponding to the deterioration amount becomes high, the reason why the usage fee is large sum can be presented to the user, and smooth application can be carried out.

Next, a check processing of the battery by the check device 2 according to the first embodiment is described in detail.

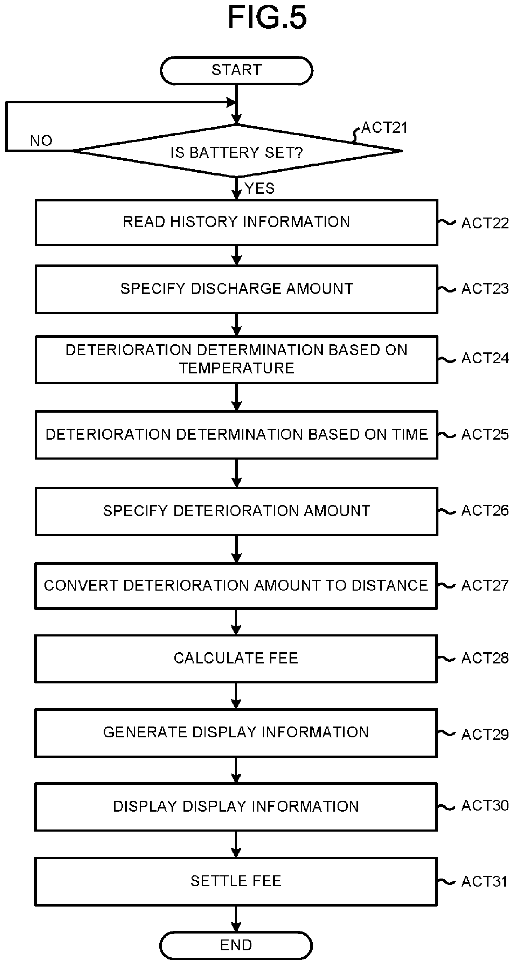

Fig. 5 is a flowchart illustrating the flow of the check processing of the battery by the check device 2 according to the first embodiment.

In the charging stand, the worker removes the battery 1 from the electric automobile according to the request of the battery exchange from the user and connects the removed battery 1 with the check device 2. The worker which connects the battery 1 and the check device 2 instructs the start of the check processing of the battery.

If the start of the check processing of the battery is instructed, the processor 21 of the check device 2 checks whether or not the check device 2 is connected with the battery 1 via the I/F 13 (ACT 21). If the battery 1 is not connected with the check device 2 (NO in ACT 21), the processor 21 repeats connection check of the battery. Further, if the battery 1 is not connected with the check device 2, the processor 21 may display connection guidance of the battery on the display section 25.

If the battery 1 is connected with the check device 2 (YES in ACT 21), the processor 21 reads the history information from the battery 1 (ACT 22). For example, the processor 21 supplies a command requesting the history information to the battery 1. The battery 1 outputs the history information stored in the storage section 14 according to the command from the check device 2. The history information output by the battery 1 includes information for specifying the deterioration amount. For example, the history information includes temperature information obtained by associating the temperature measured by the thermometer 17 with the date and time. Further, the history information includes the information indicating the date and time when the use of the battery is started (date and time set in the electric automobile) . Furthermore, the history information may include the information such as the current value measured by the ammeter and the voltage value measured by the voltmeter in association with the date and time. Further, the history information may include the discharge amount calculated from an added value of discharged currents. The history information may include the number of times of charging and the number of times of discharging.

If acquiring the history information from the battery 1, the processor 21 of the check device 2 specifies the discharge amount of the battery 1 (ACT 23) . For example, the processor 21 specifies the discharge amount according to the current voltage value of the battery 1 or the added value of the discharged currents.

Further, the processor 21 specifies the deterioration amount on the basis of the history information acquired from the battery 1 (ACTs 24-26). The processor 21 specifies the deterioration amount in consideration of the deterioration corresponding to the usage state specified from the history information. In the first embodiment, the processor 21 at least specifies the deterioration amount of the battery 1 in consideration of the deterioration amount corresponding to the temperature and the deterioration amount corresponding to the usage period (time).

In other words, the processor 21 determines the deterioration corresponding to the temperature at the time of the use which is specified from the history information (ACT 25). In the deterioration determination corresponding to the temperature, the processor 21 specifies the temperature at the time of the use of the battery 1 according to the history information. If specifying the temperature at the time of the use, the processor 21 specifies the deterioration amount corresponding to the temperature. For example, the processor 21 calculates the deterioration amount corresponding to the temperature with reference to deterioration determination information with respect to the temperature which is included in the deterioration diagnosis information stored in the storage area 24b. Furthermore, the temperature for the deterioration determination may be an average temperature during the usage period and may be a temperature of each predetermined period (for example, each predetermined time or each day) in the usage period. In the latter case, the processor 21 may determine the deterioration amount based on the temperature for each predetermined period and set a value obtained by adding the deterioration amount in the usage period to the deterioration amount based on the temperature.

Further, the processor 21 determines the deterioration corresponding to the usage period specified from the history information (ACT 26). In the deterioration determination corresponding to the usage period, the processor 21 specifies the usage period of the battery 1 according to the history information. Herein, the usage period of the battery 1 refers to elapsed time from a moment the battery 1 is mounted on the electric automobile. If specifying the usage period, the processor 21 specifies the deterioration amount corresponding to the usage period. For example, the processor 21 calculates the deterioration amount corresponding to the usage period specified from the history information with reference to the information for the deterioration determination corresponding to the usage period which is stored in advance in the storage section 14.

If calculating the deterioration amount corresponding to the temperature and the deterioration amount corresponding to the usage period, the processor 21 specifies the deterioration amount of the battery 1 in consideration of the deterioration amount (ACT 26) . If specifying the deterioration amount of the battery 1, the processor 21 converts the deterioration amount to the distance (another index) to be informed to the user (ACT 27) . If specifying the deterioration amount of the battery 1, the processor 21 calculates the usage fee including the use fee and the work wage corresponding to the deterioration amount and the discharge amount considering the temperature and the usage period (ACT 28). This usage fee is a fee for receiving provision of the service which exchanges the used battery with a full charge battery (new battery).

If calculating the usage fee, the processor 21 generates display information to be informed to the user (ACT 29). The display information may include the information indicating the usage fee and the deterioration amount converted to the distance. Further, the display information may include not only the usage fee and the deterioration amount but also information indicating a primary factor of the increase of the deterioration amount. For example, in a case in which the battery is used at the high temperature, the processor 21 may display a message indicating that the deterioration becomes large due to the use at the high temperature. In this case, the processor 21 may display the temperature specified as the usage environment from the history information and the larger deterioration amount than that at the standard temperature with concrete numerical values. Further, in a case in which the battery is used for a long period, the processor 21 may display a message indicating that the deterioration becomes large due to the long-period use. In this case, the processor 21 may display the usage period specified from the history information and the larger deterioration amount than that in a standard specification period with concrete numerical values.

If generating the display information indicating the usage fee and the deterioration amount, the processor 21 displays the generated display information on the display section 25 (ACT 30) . In this way, the user can recognize the deterioration amount of the battery converted to the distance and the usage fee from the information displayed on the display section 25. Further, in a case in which the primary factor of the generation of the deterioration is also displayed, the user can also recognize the primary factor of the deterioration.

If displaying the usage fee and the deterioration amount, the processor 21 carries out the settlement processing of the usage fee with the settlement section 27 (ACT 31). The settlement processing may be a settlement processing with cash or a settlement processing with a credit card or electronic money. Further, the settlement processing may be carried out through human work of the worker. In a case of the settlement with the human work of the worker, the processor 21 may complete the settlement processing by receiving an instruction input of settlement completion. If the settlement processing is completed, the processor 21 ends the check processing on the battery 1.

Furthermore, after the settlement processing is completed, the processor 21 may transfer the information relating to the check processing of the battery to the server 3. For example, the processor 21 sends the information such as the deterioration amount, the usage fee, a settlement result, and/or the history information together with the identification information (battery ID) of the battery to the server 3. The server 3 holds the information relating to the check processing of the battery from the check device 2. In this way, the server 3 can collect history of each battery and is possible to collectively manage all the batteries in the entire battery providing system.

As stated above, in the battery providing system according to the first embodiment, the check device acquires the history information indicating the environment in which the battery is used actually from the battery. The check device specifies the temperature and the usage period at the time of the actual use from the acquired history information and determines the deterioration amount of the battery corresponding to the actual usage environment.

In this way, according to the battery providing system, the actual usage environment can be specified from the history information of the battery, and the deterioration amount corresponding to the actual usage environment can be determined. In this way, the battery providing system can collect the deterioration amount generated due to the use in the high or low temperature environment different from the standard temperature environment as the use fee from the user. Further, the battery providing system can collect not only the usage amount of the electric power but also the deterioration amount generated due to the use in a period different from the standard usage environment as the use fee from the user.

Further, the check device according to the first embodiment converts the determined deterioration amount of the battery to the index such as the distance which is easily recognized by the user and displays the index indicating the deterioration amount. In this way, the user can intuitively recognize the deterioration amount of the battery, and the smooth settlement of the usage fee can be promoted.

### (Second Embodiment)

A battery providing system (battery check system) according to the second embodiment is a system for providing the user with the battery loaded on the mobile device. The battery providing system according to the second embodiment assumes application for carrying out daily charging of the battery with a charger to be provided for the user. The battery providing system checks the state of the battery at a regular or any timing and provides the service for exchanging the battery as necessary.

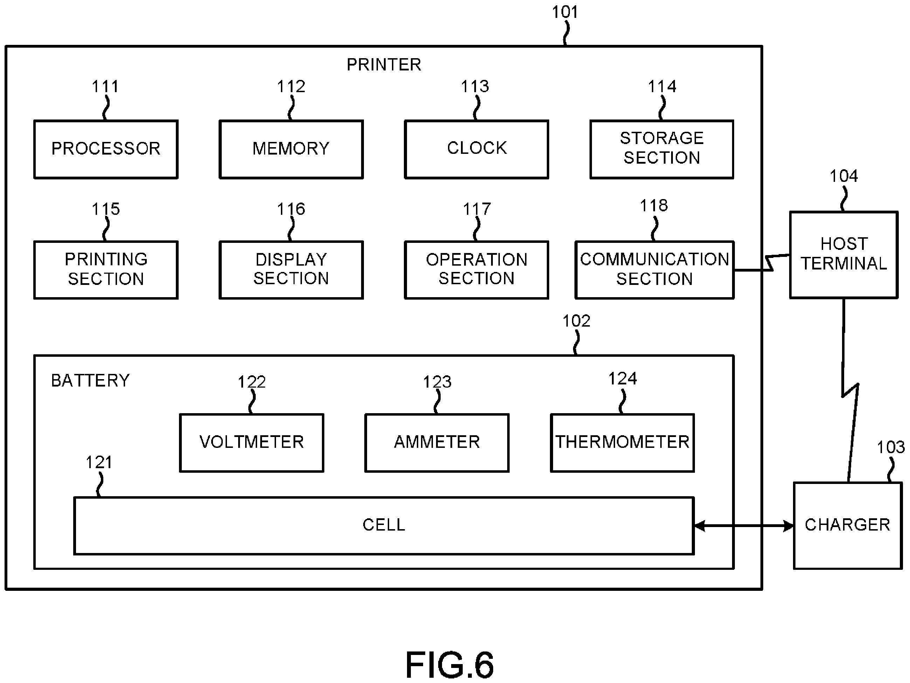

Fig. 6 is a block diagram schematically illustrating an example of the configuration of the battery charging system and an example of the configuration of a printer (mobile device) 101 according to the second embodiment.

For example, the portable printer 101 loaded with a battery 102 is assumed to be the mobile device. The printer 101 is a device of which the battery 102 can be charged by a charger 103 carried (used) by the user for the daily charging. Further, the printer 101 includes a function for establishing communication connection with a host terminal 104 capable of carrying out data communication.

In the example of the configuration shown in Fig. 6, the printer 101 is provided with a processor 111, a memory 112, a clock 113, a storage section 114, a printing section 115, a display section 116, an operation section 117 and a communication section 118 in addition to the battery 102. Further, the battery 102 is provided with a cell 121, a voltmeter 122, an ammeter 123 and a thermometer 124.

The cell 121 is provided with one or a plurality of cells functioning as a secondary battery. The cell 121 is provided with a connection terminal for connecting with the main body of the printer 101 or the charger 103. The cell 121 is charged by electric power supplied to the connection terminal. Further, the cell 121 discharges the electric power by supplying the electric power to the load connected with the connection terminal.

The voltmeter 122, the ammeter 123 and the thermometer 124 are measuring instruments which measure information indicating states of the battery 102. The voltmeter 122 measures a voltage value of the cell 121. The ammeter 123 measures a value of a current flowing through the connection terminal of the cell 121. Further, the thermometer 124 measures a temperature of the battery 102 or the vicinity of the battery 102. Each of the measuring instruments (the voltmeter 122, the ammeter 123 and the thermometer 124) is connected with the processor 111. The processor 111 can acquire the value measured by each of the measuring instruments 122 to 124 at any time. Furthermore, the battery 102 may be provided with a measuring instrument that measures information other than the voltage, the current and the temperature as information for calculating the deterioration amount of the battery described later.

The processor 111 carries out control of each section and an arithmetic processing. The processor 111 includes an arithmetic circuit. The processor 111 is, for example, a CPU. The memory 112 includes storage devices such as a RAM functioning as a working memory and a ROM functioning as a program memory. The processor 111 realizes various processing functions by executing programs stored in the memory 112 or the storage section 114.

The clock 113 counts date and time. Further, the clock 113 may be a timer which counts a charging interval and usage time.

The storage section 114 is a data memory. The storage section 114 stores the history information indicating the usage state of the battery 102. As the history information of the battery, the storage section 114 stores information obtained by associating the information such as the number of times of charging, the number of times of discharging, the current value, the voltage value and the temperature with the date and time counted by the clock 113. For example, the processor 111 stores charging history information including the date and time when the battery 102 is charged and the number of times of charging in the storage section 114 as the history information of the battery. Further, the processor 111 stores discharging history information such as the date and time when the battery 102 is discharged and the number of times of discharging in the storage section 114 as the history information of the battery. Further, the processor 111 stores the information measured by the voltmeter 122, the ammeter 123 and the thermometer 124 in the storage section 114 as the history information indicating the usage states associated with the date and time.

The printing section 115 is an image forming section for forming an image on a medium. The display section 116 is a device which displays information. The operation section 117 is a user interface for the user to input an operation instruction. The communication section 118 is an interface for carrying out data communication with an external device. In the second embodiment, the communication section 118 is constituted as an interface for communicating with the host terminal 104. For example, the processor 111 outputs data accumulated (stored) in the storage section 114 to the host terminal 104 via the communication section 118.

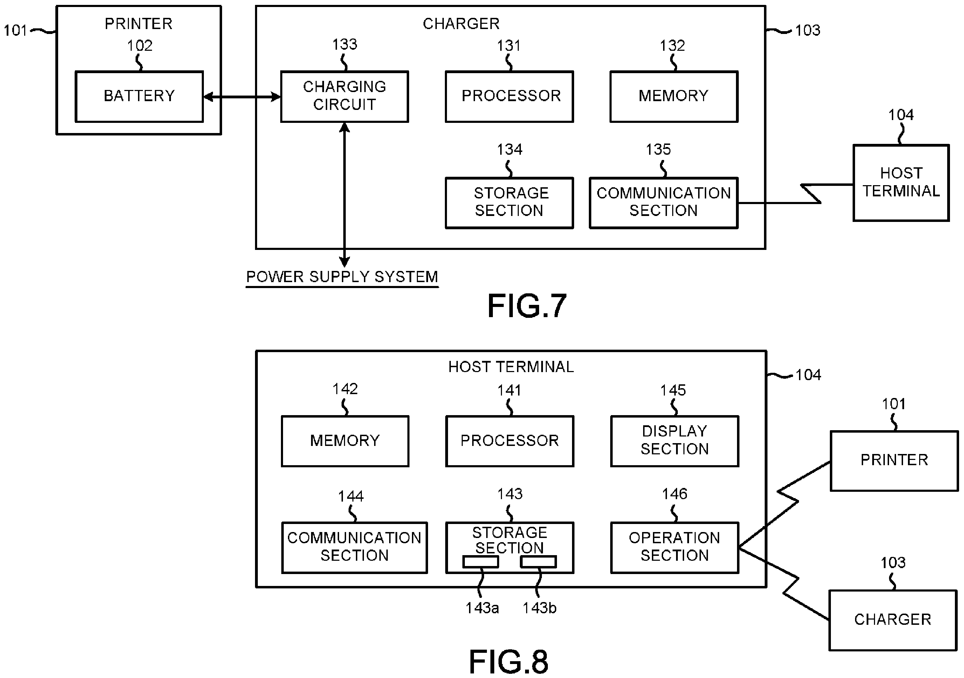

Fig. 7 is a block diagram schematically illustrating an example of the configuration of the charger 103 in the battery providing system according to the second embodiment.

In the example of the configuration shown in Fig. 7, the charger 103 is provided with a processor 131, a memory 132, a charging circuit 133, a storage section 134 and a communication section 135.

The processor 131 carries out control of each section and an arithmetic processing. The processor 131 includes an arithmetic circuit. The processor 131 is, for example, a CPU. The memory 132 includes storage devices such as a RAM functioning as a working memory and a ROM functioning as a program memory. The processor 131 realizes various processing functions by executing programs stored in the memory 132 or the storage section 134.

The charging circuit 133 includes a circuit for charging the battery 102. The charging circuit 133 is connected with the printer 101 and also connected with a power supply system. The charging circuit 133 converts electric power supplied from the power supply system to a predetermined current value, and supplies the predetermined current value to the battery 102. Further, the charging circuit 133 may be directly connected with the battery 102 without going through the printer 101.

The storage section 134 is a data memory. The storage section 134 stores various kinds of information for realizing a variety of processing executed by the processor 131. Further, the storage section 134 stores the history information of the battery. For example, the storage section 134 stores the information acquired from the printer 101 or the battery 102 in association with the identification information (battery ID) of the battery 102. The information stored in the storage section 134 includes information for determining the deterioration amount of the battery such as the charging history information.

The communication section 135 is an interface for communicating with an external device. In the second embodiment, the processor 131 communicates with the host terminal 104 via the communication section 135.

Fig. 8 is a block diagram schematically illustrating an example of the configuration of the host terminal 104 in the battery providing system according to the second embodiment.

In the example of the configuration shown in Fig. 8, the host terminal 104 is provided with a processor 141, a memory 142, a storage section 143, a communication section 144, a display section 145 and an operation section 146.

The processor 141 carries out control of each section and an arithmetic processing. The processor 141 includes an arithmetic circuit. The processor 141 is, for example, a CPU. The memory 142 includes storage devices such as a RAM functioning as a working memory and a ROM functioning as a program memory. The processor 141 realizes various processing functions by executing programs stored in the memory 142 or the storage section 143.

The storage section 143 is a data memory. The storage section 143 stores various kinds of information for realizing a variety of processing executed by the processor 141. The storage section 143 stores the history information indicating the usage state of the battery 102 acquired from the printer 101 or the charger 103. Further, the storage section 143 is provided with a storage area 143a which stores a program for carrying out the check processing of the battery and a storage area 143b which stores the deterioration diagnosis information of the battery. The deterioration diagnosis information of the battery is data for determining the deterioration amount of the battery 102 from the history information. For example, the deterioration diagnosis information of the battery includes information for calculating the deterioration amount corresponding to the temperature at the time of the use. Further, the deterioration diagnosis information of the battery includes information for calculating the deterioration amount corresponding to the usage time.

The communication section 144 is an interface for communicating with the printer 101 and the charger 103. The communication section 144 may be respectively provided with an interface for connecting with the printer 101 and an interface for connecting with the charger 103. The display section 145 is a device which displays information. The operation section 146 is a user interface for inputting an operation from the user.

Next, the flow of a processing in the battery providing system according to the second embodiment is described.

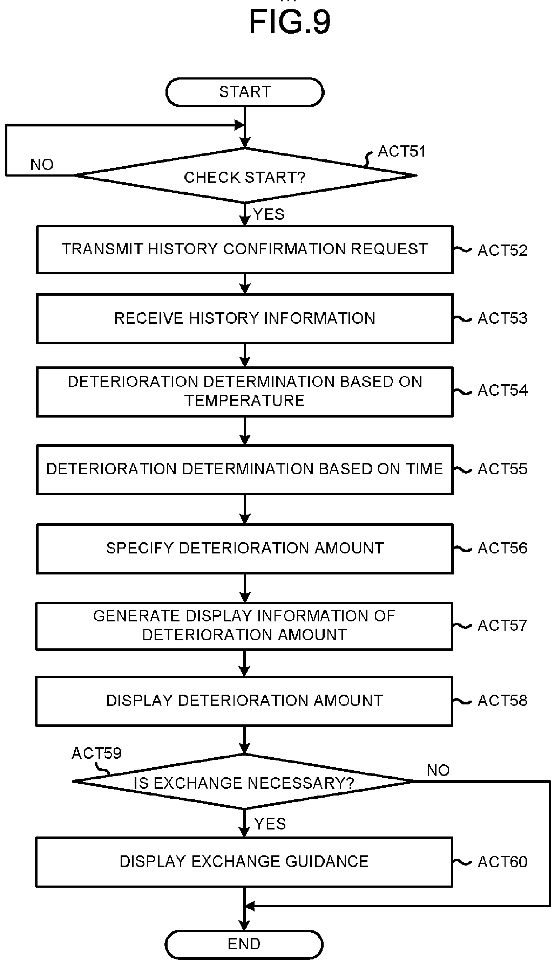

Fig. 9 is a flowchart illustrating an example of the check processing of the battery by the host terminal 104 in the battery providing system according to the second embodiment.

A program of the host terminal 104 for confirming the deterioration amount of the battery 102 loaded on the printer 101 is installed in the storage area 143a. The host terminal 104 executes the check processing of the battery in a stated of being connected with the printer 101, the charger 103, or both of the printer 101 and the charger 103. For example, the user connects the printer 101 and/or the charger 103 with the host terminal 104 and instructs check start of the battery through the operation section 146. If the check start is instructed by the operation section 146, the processor 141 of the host terminal 104 activates the program to start the check processing of the battery (YES in ACT 51).

If starting the check processing of the battery, the processor 141 of the host terminal 104 transmits a sending request of the history information to the printer 101 and/or the charger 103 (ACT 52) . For example, the processor 141 transmits the identification information of the battery and a confirmation request of the history of charging or discharging of the battery to the printer 101 and/or the charger 103. The printer 101 and/or the charger 103 receiving the confirmation request of the history generate history information indicating the history of charging or discharging of the battery 102. The printer 101 and/or the charger 103 send the generated history information of the battery 102 to the host terminal 104 as a response to the confirmation request.

For example, the printer 101 stores the values measured by the voltmeter 122, the ammeter 123 and the thermometer 124 in the storage section 114 as the history information in associated with the date and time counted by the clock 113. Further, the printer 101 also stores the use start date and time, the usage period, the number of times of charging of the battery 102 in the storage section 114 as the history information. The printer 101 may acquire information at the time of the charging such as the number of times of charging from the charger 103, and may also store the information acquired from the charger 103 in the storage section 114 as the history information.

If the battery 102 is connected with the charging circuit 133, the charger 103 carries out the charging after checking the battery ID of the connected battery. The charger 103 stores the information at the time of the charging in the storage section 134 as the history information associated with the battery ID. The charger 103 stores the information, for example, the number of times of charging, the charging date and time and the like in the storage section 134 as the history information of each battery ID. Further, the charger 103 may acquire the information (temperature and usage period) relating to the battery 102 from the printer 101 and store the acquired information in the storage section 134 as the history information.

After sending the confirmation request of the history, the host terminal 104 receives the history information from the printer and/or the charger 103 through the communication section 118 (ACT 53) . If receiving the history information, the processor 141 of the host terminal 104 determines the deterioration of the battery 102 on the basis of the history information and the deterioration diagnosis information of the battery (ACTs 54-56) . The processor 141 specifies the deterioration amount in consideration of the deterioration corresponding to the usage state specified from the history information. In the second embodiment, the processor 141 at least specifies the deterioration amount in consideration of the deterioration corresponding to the temperature at the time of the use and the deterioration corresponding to the usage time.

The processor 141 determines the deterioration corresponding to the temperature at the time of the use specified from the history information (ACT 54) . The processor 141 specifies the temperature at the time of the use of the battery 102 according to the history information. If specifying the temperature at the time of the use, the processor 141 specifies the deterioration amount corresponding to the temperature. For example, the processor 141 calculates the deterioration amount corresponding to the temperature with reference to deterioration determination information with respect to the temperature which is included in the deterioration diagnosis information stored in the storage section 143. Furthermore, the temperature for the deterioration determination may be an average temperature during the usage period and may be a temperature of each predetermined period (for example, each predetermined time or each day) in the usage period. In the latter case, the processor 141 may determine the deterioration amount based on the temperature for each predetermined period and set a value obtained by adding the deterioration amount in the usage period to the deterioration amount based on the temperature.

Further, the processor 141 determines the deterioration corresponding to the usage period (time) specified from the history information (ACT 55) . In the deterioration determination corresponding to the usage period, the processor 141 specifies the usage period of the battery 102 according to the history information. Herein, the usage period of the battery 102 refers to elapsed time from a moment the battery 102 is mounted in the printer 101. If specifying the usage period, the processor 141 specifies the deterioration amount corresponding to the usage period. For example, the processor 141 calculates the deterioration amount corresponding to the usage period with reference to the deterioration determination information with respect to the usage period included in the deterioration diagnosis information stored in the storage section 143.

If calculating the deterioration amount corresponding to the temperature and the deterioration amount corresponding to the usage period, the processor 141 specifies the deterioration amount of the battery 102 in consideration of the deterioration amount corresponding to the temperature and the deterioration amount corresponding to the usage period (ACT 56). If calculating the deterioration amount of the battery 102, the processor 141 generates the display information for informing the user of the calculated deterioration amount (ACT 57). The display information may include the deterioration amount and information indicating a primary factor of the increase of the deterioration amount. For example, in a case in which the battery 102 is sued at the high temperature, the processor 141 may display a message indicating that the deterioration becomes large due to the use at the high temperature. Further, in a case in which the battery 102 is used for a long period, the processor 141 may display a message indicating that the deterioration becomes large due to the long-period use.

If generating the display information indicating the deterioration amount, the processor 141 displays the generated display information on the display section 145 (ACT 58). The user can recognize the deterioration amount of the battery 102 from the information displayed on the display section 145 and the primary factor of the generation of the deterioration. Further, the deterioration amount may be converted to another intuitive index by the user to be displayed. For example, in the second embodiment, the deterioration amount may be replaced with a print amount by the printer 101 to be displayed.

Further, if specifying the deterioration amount of the battery 102, the processor 141 determines whether or not the exchange of the battery 102 is necessary (ACT 59). If it is determined that the exchange of the battery 102 is necessary (YES in ACT 59), the processor 141 determines an exchange cost and displays exchange guidance including the exchange cost on the display section 145 (ACT 60) . Furthermore, the exchange cost of the battery may include the use fee calculated according to the deterioration amount of the battery 102. In this case, the processor 141 may calculate the use fee according to the deterioration amount and determine the exchange cost including the calculated use fee.

As stated above, the battery providing system according to the second embodiment is provided with the printer as the mobile device loaded with the battery, the charger and the host terminal. The printer and/or the charger store the history information indicating the usage state of the battery. The host terminal acquires the history information indicating the usage state of the battery from the printer and/or the charger. The host terminal specifies the temperature and the usage time at the time of the actual use from the acquired history information, and determines the deterioration amount of the battery corresponding to the actual usage environment.

According to the battery providing system of the second embodiment, even if the battery itself may not store the history information, the history information of the battery can be acquired from the printer and/or the charger. In other words, according to the second embodiment, even for a battery which does not include a function for storing the history information, the deterioration amount thereof corresponding to the actual usage environment can be determined. Further, according to the second embodiment, even for a battery charged by the user himself/herself daily with the charger, the deterioration amount thereof corresponding to the actual usage environment (temperature or usage time) can be determined.

In each embodiment described above, the deterioration amount is calculated on the basis of at least one of the temperature and the usage time; however, the present invention is not limited to this. For example, the deterioration amount may be calculated on the basis of humidity. If occurrence of rust is considered, in general, the higher the humidity is, the larger the deterioration amount becomes. Further, by acquiring positional information with the battery or the mobile device loaded with the battery, the deterioration amount may be calculated on the basis of the positional information. The positional information is acquired by, for example, GPS (Global Positioning System). The deterioration amount is calculated according to, for example, the usage time or a climate condition based on the positional information.

Further, in each embodiment described above, the battery check system or the host terminal determines the deterioration amount; however, the present invention is not limited to this. The deterioration amount may be determined with only the battery by loading an IC on the battery itself.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A battery check device, comprising:
a memory configured to store deterioration diagnosis information for determining a deterioration amount corresponding to a usage state of a battery;
an interface configured to connect with the battery to which deterioration diagnosis based on the deterioration diagnosis information is applicable; and
a processor configured to read history information indicating the usage state from the battery connected with the interface, and determine the deterioration amount of the battery connected with the interface on the basis of the history information read from the battery and the deterioration diagnosis information stored in the memory.

2. The battery check device according to claim 1, wherein
the deterioration diagnosis information comprises information indicating a deterioration amount corresponding to a temperature of a usage environment of the battery; and
the processor is configured to determine the deterioration amount of the battery comprising deterioration corresponding to the temperature of the environment where the battery is used which is specified from the history information with reference to the deterioration diagnosis information.

3. The battery check device according to claims 1 or 2, wherein
the deterioration diagnosis information comprises information indicating a deterioration amount corresponding to a usage period of the battery; and
the processor is configured to determine the deterioration amount of the battery comprising deterioration corresponding to the usage period of the battery which is specified from the history information with reference to the deterioration diagnosis information.

4. The battery check device according to any one of claims 1 to 3, further comprising:
a display section, wherein
the processor is configured to convert the deterioration amount of the battery to an index in a case in which an electric motor operates using the battery in a standard environment and displays the converted index as a value indicating the deterioration amount of the battery on the display section.

5. The battery check device according to any one of claims 1 to 4, further comprising:
a display section, wherein
the processor is configured to display information indicating a primary factor of increase of the deterioration amount of the battery in a case in which the deterioration amount of the battery is larger than the deterioration amount in a case in which an electric motor operates using the battery in the standard environment on the display section.

6. The battery check device according to any one of claims 1 to 5, further comprising:
a settlement section configured to settle a fee, wherein
the processor is configured to calculate a usage fee comprising a use fee corresponding to the determined deterioration amount and carries out a settlement processing of the calculated usage fee with the settlement section.

7. A battery check system, comprising:
a mobile device configured to be charged by the battery; and
the battery check device according to any one of claims 1 to 6 as a host terminal configured to communicate with the mobile device.

8. A method for checking deterioration amount of a partially or fully discharged battery, comprising steps of:
reading history information indicating the usage state from the battery;
reading deterioration diagnosis information stored in a memory or obtainable from a network; and
determining the deterioration amount of the battery on the basis of the history information read from the battery and the deterioration diagnosis information stored in the memory.

9. The method according to claim 8, wherein the history information comprises temperature of an environment where the battery is used.

10. The method according to claims 8 or 9, wherein the history information comprises usage of period of the battery.

11. The method according to any one of claims 8 to 10, further comprising steps of:
converting the deterioration amount of the battery to an index in a case in which an electric motor operates using the battery in a standard environment; and
displaying the converted index as a value indicating the deterioration amount of the battery.

12. The method according to any one of claims 8 to 11 , further comprising step of:
displaying information indicating a primary factor of increase of the deterioration amount of the battery in a case in which the deterioration amount of the battery is larger than the deterioration amount in a case in which an electric motor operates using the battery in the standard environment.

13. The method according to any one of claims 8 to 12, further comprising step of:
calculating a usage fee comprising a use fee corresponding to the determined deterioration amount.

14. The method according to any one of claims 8 to 13, wherein the battery is used for a mobile printer.

15. The method according to any one of claims 8 to 14, wherein the battery is used for an electric vehicle.
